# EUROPÄISCHE PATENTSCHRIFT

(11) **EP 2 304 210 B1**
(45) Veröffentlichungstag und Bekanntmachung des Hinweises auf die Patenterteilung: **31.05.2017**
(21) Anmeldenummer: 09776517.6
(22) Anmeldetag: 07.04.2009
(51) Int. Cl.: F02F 3/00, F02F 3/22, B23P 15/10

(54) **REIBGESCHWEISSTER STAHLKOLBEN MIT OPTIMIERTEM KÜHLKANAL**
FRICTION WELDED STEEL PISTON HAVING OPTIMIZED COOLING CHANNEL
PISTON EN ACIER SOUDÉ PAR FRICTION AVEC CANAL DE REFROIDISSEMENT OPTIMISÉ

(30) Priorität: 24.07.2008 DE 102008034430
(43) Veröffentlichungstag der Anmeldung: 06.04.2011
(73) Patentinhaber: KS Kolbenschmidt GmbH, 74172 Neckarsulm (DE)
(72) Erfinder: GNIESMER, Volker, 31061 Alfeld (DE)
(74) Vertreter: Greif, Thomas
(86) Internationale Anmeldenummer: PCT/EP2009/002536
(87) Internationale Veröffentlichungsnummer: WO 2010/009779

(56) Entgegenhaltungen:
- WO-A1-00/04286
- DE-A1- 10 346 819
- GB-A- 1 096 826
- JP-A- 2005 090 448
- JP-A- 2006 299 979
- SU-A1- 1 283 432
- US-B1- 6 698 391

## Beschreibung

Die Erfindung betrifft einen aus Stahl hergestellten Kolben einer Brennkraftmaschine, der ein Oberteil und ein Unterteil umfasst, deren Fügestege im Bereich einer Kontaktgeometrie mittels einer Reibschweißung stoffschlüssig verbunden sind, zur Bildung einer Baueinheit. Zur Kühlung ist in dem Kolben zumindest ein von einem Kühlmittel beaufschlagter Kühlkanal integriert. Das Kühlmittel, ein Schmieröl der Brennkraftmaschine, gelangt über einen freien Strahl einer Einspritzdüse in eine Eintrittsöffnung, durchströmt den Kühlkanal und verlässt diesen über eine Austrittsöffnung.

Thermisch stark belastete Zonen von Kolben für Brennkraftmaschinen, wie beispielsweise die Brennraummulde im Kolbenboden oder der Bereich der ersten Nut, erfordern eine wirksame Kühlung. Dazu ist es bekannt in dem Kolben einen Kühlkanal zu integrieren. Durch den bevorzugt als Hohlraum gestalteten Kühlkanal zirkuliert ein Kühlmittel, vorzugsweise das Schmieröl der Brennkraftmaschine. Die Wirksamkeit der Kolbenkühlung wird insbesondere von dem ausgetauschten Volumen des Kühlmittels in dem Kühlkanal bestimmt.

Die US 6,155,157 offenbart einen Kühlkanalkolben, der zwei separat voneinander herstellbare Bauteile umfasst, die über ein Reibschweißverfahren stoffschlüssig zusammengefügt sind. Als Kühlkanal ist ein zu dem Ringfeld des Kolbens umlaufend beabstandeter, rotationssymmetrisch gestalteter Ringkanal vorgesehen, der über eine ortsfest positionierte Einspritzdüse von einem Kühlmittel, insbesondere dem Schmieröl der Brennkraftmaschine beaufschlagt wird.

Aus der DE 39 06 582 C1 ist ein mehrteiliger Kolben bekannt, deren Einzelteile zur Erzielung einer stoffschlüssigen Verbindung und einer Baueinheit mittels einer Reibschweißung verbunden sind. Bei diesem Verfahren werden die Bauteile unter Druckbelastung, vorzugsweise durch eine drehende Bewegung solange gegeneinander gerieben, bis die Kontaktgeometrie bzw. die Fügezone die für ein Verschweißen beider Bauteile geeignete Temperatur erreicht hat. An das Aufheizen durch Reiben schließt sich ein Stauchvorgang an, bei dem die weichen oder aufgeschmolzenen Bereiche der Bauteile aufgerissen, plastisch deformiert und aufeinander gedrückt werden. Dabei bildet sich auf beiden Seiten des Fügestegs eine aus der Kontaktgeometrie austretende Schweißwulst.

Ähnliche Kolben sind aus WO0004286 oder US6 698 391 bekannt.

Weiterhin gibt es Kolben mit kleiner Kompressionshöhe, bei dem sich aufgrund der Kolben-Bauhöhe relativ kurze Fügestege zwischen dem Oberteil und dem Unterteil des Kolbens einstellen. Aufgrund des damit verbundenen beengten Bauraums im Bereich der Kontaktgeometrie besteht die Gefahr, dass die als Bohrung gestalteten Eintritts- und Austrittsöffnungen des Kühlkanals bei einem Fügeprozess, dem Reibschweißverfahren, sich durch eine Schweißwulst verengen. Dadurch reduziert sich der Kühlmittelaustausch, verbunden mit einem unmittelbaren nachteiligen Einfluss auf die Kühlung des Kolbens.

Der vorliegenden Erfindung liegt die Aufgabe zugrunde, einen Kühlkanalkolben mit einer verbesserten Kühlwirkung zu schaffen, bei dem die Verweildauer des Kühlmittels im Kühlkanal sich verlängert.

Diese Aufgabe ist durch die Merkmale des Patentanspruchs 1 und durch das Verfahren nach Anspruch 11 gelöst.

Erfindungsgemäß ist nach Anspruch 1 vorgesehen, dass zur Einleitung des Kühlmittels in den Kühlkanal die Eintrittsöffnung ein in dem Unterteil eingesetztes Strömungsrohr einschließt. Die Öffnung des mit einem Überstand aus einem Kühlkanalboden hervortretenden Strömungsrohrs ist dabei oberhalb einer Kontaktgeometrie und deren zugehörigen Schweißwulst der Reibschweißung positioniert.

Das Strömungsrohr ist so in der sich zwischen dem Oberteil und dem Unterteil einstellenden Kontaktgeometrie angeordnet, dass dieses mit einem Überstand aus einem Kühlkanalboden hervortritt. Das Überstandsmaß ist erfindungsgemäß so gewählt, dass eine Öffnung des Strömungsrohres oberhalb einer Schweißwulst positioniert ist, die sich mittels einer Reibschweißung, insbesondere einer Reibreibschweißung einstellt. Der für die Wirksamkeit der Kolbenkühlung entscheidende Kühlmittelaustausch bleibt damit uneingeschränkt erhalten, da sich keine auf die Kühlwirkung des Kolbens negativ auswirkende Querschnittsverengung durch eine Schweißwulst im Bereich der Eintrittsöffnung des Kühlkanals einstellen kann.

Während eines Aufwärtshub des Kolbens wird das sich im Kühlkanal befindliche Kühlmittel bedingt durch die Beschleunigung an den Kühlkanalboden gedrückt. Dabei unterbindet die erfindungsgemäße Einbaulage des Strömungsrohres einen Rücklauf oder Austritt des Kühlmittels über die Eintrittsöffnung des Kühlkanal und gewährleistet eine optimale über 360° Kurbelwinkel sich erstreckende Befüllung des Kühlkanals. Gleichzeitig wird eine nachteilige zu einer Ölverschäumung führende Strömungsbeeinflussung durch austretendes Kühlmittel an der Eintrittsöffnung verhindert.

Durch die im oberen Totpunkt des Kolbens schnell erfolgende Bewegungsumkehr des Kolbens wird das an dem Kühlkanalboden befindliche Kühlmittel oder Schmiermittel aufgrund der Trägheitswirkung großflächig gegen die insbesondere von einer Unterseite des Kolbenbodens gebildete Deckfläche des Kühlkanals geschleudert wird. Das den gesamten Kühlkanal beaufschlagende Kühlmittel in Verbindung mit den Kolben-Wechselbewegungen bewirkt eine Optimierung des Kühlmittelstroms sowie eine verbesserte Ausnutzung der Shakerwirkung.

Eine gesteigerte Verweildauer des Kühlmittels (Kühlöls) im Kühlkanal sowie ein verstärkter Shakereffekt bewirken eine verbesserte gewünschte Wärmeabfuhr der zu kühlenden thermisch hoch belasteten Kolbenbereiche.

Das über den gesamten Kühlkanal bewegte Kühlmittel sorgt für eine wirksame Kühlung der thermisch hoch beanspruchten Kolbenzonen ohne Gefahr einer Verbrennung des Kühlmittels.

Weitere vorteilhafte Ausgestaltungen der Erfindung sind Gegenstand der abhängigen Ansprüche 2 bis 10.

Gemäß einer bevorzugten Ausgestaltung der Erfindung übertrifft ein Abstandsmaß "x" zwischen der Öffnung des Strömungsrohrs und dem Kühlkanalboden ein Maß "y", das einen Füllstand des Kühlmittels in einer Aufwärtsbewegung des Kolbens in dem Kühlkanal definiert. Das sich einstellende Differenz- oder Abstandsmaß gewährleistet, dass unabhängig von der Kolbenbewegungsrichtung ein nachteiliger Rückfluss und eine damit verbundene Strahlbeeinflussung des Kühlmittels im Bereich der Eintrittsöffnung unterbleibt. Das formstabile Strömungsrohr wird vor dem Reibschweißen so in einer Aufnahmebohrung des Kolbenunterteils angeordnet, dass nach einem Zusammenfügen mit dem Kolben-Oberteil sich das Abstandsmaß "x" einstellt.

Eine dauerfeste Fixierung des Strömungsrohres erfolgt über eine Schweißwulst, die sich während der Reibschweißung bildet, mit der das Kolbenoberteil und das Kolbenunterteil miteinander stoffschlüssig verbunden werden. Die Fixierung verbessernd kann gemäß der Erfindung eine formschlüssige Befestigung zwischen den Schweißwülsten und dem Strömungsrohr erfolgen. Dazu weist erfindungsgemäß die Außenkontur des Strömungsrohres eine zur Aufnahme der Schweißnaht bestimmte Ausnehmung auf. Zur Darstellung einer kostengünstig realisierbaren Ausnehmung ist bevorzugt eine Ringnut oder eine partiell konkav gestaltete Außenkontur vorgesehen.

Zur Erzielung einer optimalen Anpassung und Lagefixierung des separaten Strömungsrohres in dem Kolben wird bevorzugt ein aus Stahl hergestelltes Rohr eingesetzt. Für das Strömungsrohr wird ein Werkstoff ausgewählt, der insbesondere hinsichtlich des Wärmeausdehnungskoeffizienten dem Kolbenwerkstoff ähnlich ist, so dass auch im Betriebszustand der Brennkraftmaschine eine zuverlässige, spielfreie Befestigung gewährleistet ist.

Das erfindungsgemäß die Eintrittsöffnung bildende, in dem Kolbenunterteil eingesetzte und über zumindest eine Schweißwulst fixierte Strömungsrohr ist bevorzugt in Richtung der Kolbenschaftenden verlängert. Damit kann vorteilhaft der Abstand zwischen der Einspritzdüse und dem Strömungsrohr verringert werden, wodurch die Effektivität und die Wirksamkeit der Kühlmittelbeaufschlagung über die Einspritzdüse in das Strömungsrohr verbessert werden kann.

Eine weitere vorteilhafte Ausgestaltung sieht vor, das Strömungsrohr kühlkanalseitig mit einer gekrümmt gestalteten Austrittsöffnung zu versehen. Bevorzugt weist das Strömungsrohr zwei in entgegengesetzte Richtungen weisende Austritte auf, die zueinander Y-förmig angeordnet sind. Diese Maßnahme berücksichtigt die schnell erfolgende Bewegungsumkehr des Kolbens an dem unteren und oberen Totpunkt und die damit verbundene Verlagerung des Kühlmittels zwischen dem Kühlkanalboden und der Deckfläche des Kühlkanals, die bei einem senkrecht bzw. parallel zu einer Kolbenmantelfläche angeordnetem Strömungsrohr dazu führen kann, dass bei der Shakerbewegung eine Teilmenge des Kühlmittels das Strömungsrohr beaufschlagt. Das endseitig gebogene Strömungsrohr mit einem vorzugsweise winkelig zu der Kolbenbewegungsrichtung bzw. zu einer Längsachse des Kolbens ausgerichteten Austritten verhindert unabhängig von der Richtung der Kolbenbewegung eine nachteiligen Kühlmitteleintritt. Weiterhin übernimmt ein Strömungsrohr mit zwei in entgegengesetzte Richtungen weisenden Öffnungen die Funktion eines Strömungsteilers, der den Kühlmittelstrom gezielt in zwei Richtungen aufteilt, zwecks gleichmäßiger Beaufschlagung des ringförmig verlaufenden Kühlkanals.

Die erfindungsgemäße gestaltete Eintrittsöffnung kann außerdem auf einen Kolben mit einem geteilten Kühlkanal übertragen werden. Dazu ist jeder Kühlkanalhälfte oder jedem Kühlkanalsegment eine Eintritts- und eine Austrittsöffnung zugeordnet, wobei bevorzugt jeder Eintrittsöffnung eine separate Einspritzdüse zugeordnet ist. Diese Gestaltung ermöglicht den Kühlkanal mit einem größeren Kühlmittelstrom zu beaufschlagen. Abhängig von der Lage dieser Öffnungen kann das Kühlmittel im Gleichstrom oder im Gegenstrom die Kühlkanalsegmente durchströmen.

Die Erfindung nach Anspruch 11 bezieht sich auf ein Verfahren zur Herstellung des Kolbens, das nachfolgende Schritte einschließt. Zunächst wird ein Strömungsrohr in eine Aufnahmebohrung des Kolbenunterteils eingesetzt, wobei eine Einbaulage beachtet wird, die sicherstellt, dass die Öffnung oder die Austritte des Strömungsrohres oberhalb einer Kontaktgeometrie angeordnet ist. Daran werden das Oberteil und das Unterteil des Kolbens zusammengesetzt, bevor mittels einer Reibschweißung diese Bauteile stoffschlüssig zusammengefügt werden. Die sich dabei bildenden Schweißwülste im Bereich der Kontaktgeometrie bewirken zumindest lokal eine kraft- und oder formschlüssige Fixierung des Strömungsrohres.

Nachfolgend wird die Erfindung anhand von Ausführungsbeispielen, unter Bezugnahme auf die Zeichnung näher erläutert.

Es zeigen:
- Fig. 1:: einen erfindungsgemäß ausgebildeten Kolben im Halbschnitt mit einem der Eintrittsöffnung des Kühlkanals zugeordneten Strömungsrohr,
- Fig. 2:: den Kolben gemäß Figur 1, mit einem alternativ angeordneten Strömungsrohr,
- Fig. 3:: ein Detail des Strömungsrohres in einer vergrößerten Darstellung,
- Fig. 4:: ein Strömungsrohr mit zwei endseitig bogenförmig gestalteten Austritten,
- Fig. 5:: einen Strömungsrohrabschnitt mit einer außenseitigen Ringnut, die zur Aufnahme von Schweißwülsten bestimmt ist,
- Fig. 6:: eine konkav gestaltete Außenkontur eines Strömungsrohres.

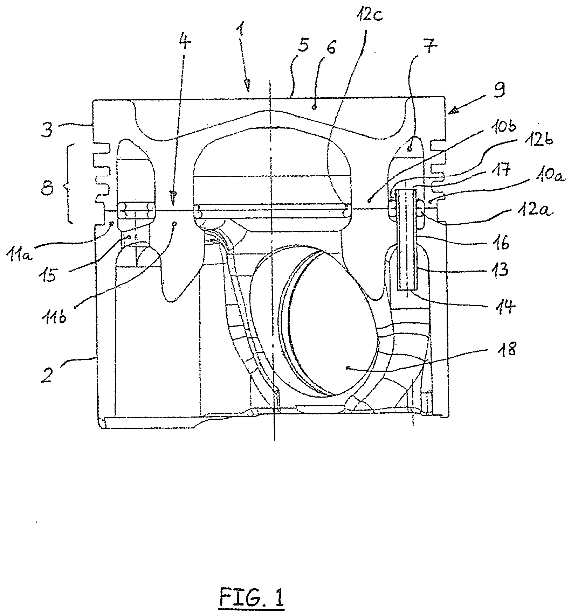

Die Figur 1 zeigt einen Kolben 1 in einer hälftigen Schnittansicht, bestehend aus einem Unterteil 2 und einem Oberteil 3, die im Bereich einer Kontaktgeometrie 4 mittels einer Reibschweißung stoffschlüssig, zur Bildung einer Baueinheit verbunden sind. Das Oberteil 3 des Kolbens 1 bildet im Bereich eines Kolbenbodens 5 eine Brennraummulde 6. Ein im Kolben 1 integrierter, ringförmig gestalteter Kühlkanal 7 erstreckt sich von dem Oberteil 3 ausgehend bis in das Unterteil 2 und verläuft dabei radial beabstandet zu einem Ringfeld 8, das in einem Außenprofil 9 eingebracht ist. Das Oberteil 3 schließt rotationssymmetrisch verlaufende, radial zueinander versetzte Fügestege 10a, 10b ein, die mit korrespondierenden Fügestegen 11 a, 11 b des Unterteils 2 die Kontaktgeometrie 4 bilden. Mittels einer durch Schweißwülste 12a, 12b, 12c sichtbaren Reibschweißung sind die Fügestege 10a, 10b; 11a, 11b im Bereich der Kontaktgeometrie 4 stoffschlüssig zur Schaffung einer einteiligen Baueinheit verbunden.

Eine Kühlmittelbeaufschlagung des Kühlkanals 7 erfolgt über eine in Figur 1 nicht dargestellte, ortsfest innerhalb der Brennkraftmaschine positionierte Einspritzdüse, von der ausgehend, das Kühlmittel in eine ein Strömungsrohr 13 einschließende Eintrittsöffnung 14 des Kühlkanals 7 eingeleitet wird. Nach einer Durchströmung des Kühlkanals 7 wird das Kühlmittel über eine Austrittsöffnung 15 abgeleitet. Das Strömungsrohr 13 ist in einer Aufnahmebohrung 16 des Unterteils 2 eingesetzt und erstreckt sich kühlkanalseitig bis über die Kontaktgeometrie 4. Dabei stellt sich eine oberhalb der Schweißwülste 12a, 12b befindliche Lage einer Öffnung 17 des Strömungsrohres 13 ein. In dieser Einbaulage wird das Strömungsrohres 13 im Bereich der Kontaktgeometrie 4 beidseitig partiell von den Schweißwülsten 12a, 12b lagefixiert. Als Maßnahme zur verbesserten Einleitung des Kühlmittels in das Strömungsrohr 13 ist dieses in Richtung einer Bolzenbohrung 18 verlängert.

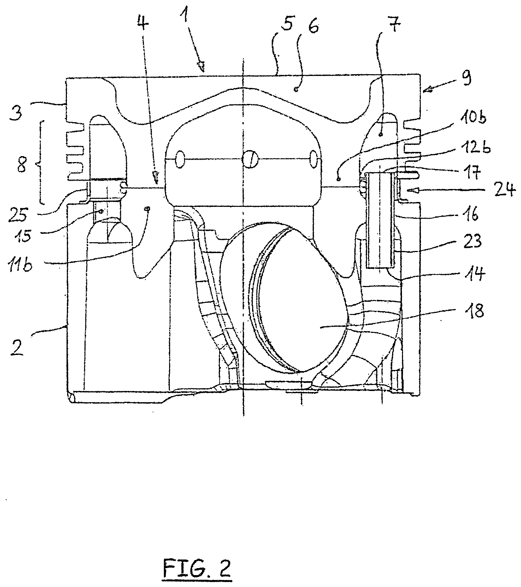

Das weitere Ausführungsbeispiel gemäß Figur 2 ist bis auf die Einbaulage des Strömungsrohres weitestgehend vergleichbar dem in Figur 1 abgebildeten Kolben 1. Gleiche Bauteile sind mit übereinstimmenden Bezugziffern versehen. Die Beschreibung der Figur 2 beschränkt sich daher auf die unterschiedliche Strömungsrohranordnung. Die Kontaktgeometrie 4 des Kolbens 1 ist auf die inneren Fügestege 10b, 11 b beschränkt. Außenseitig schließt eine separate Abdeckung 25 eine sich zwischen dem Ringfeld 8 und dem Unterteil 2 einstellende Aussparung 24, die gleichzeitig den Kühlkanal 7 abgrenzt. Dadurch bedingt wird das Strömungsrohr 23 an dem zum Kühlkanal 7 ausgerichteten Ende einseitig von der Schweißwulst 12b fixiert.

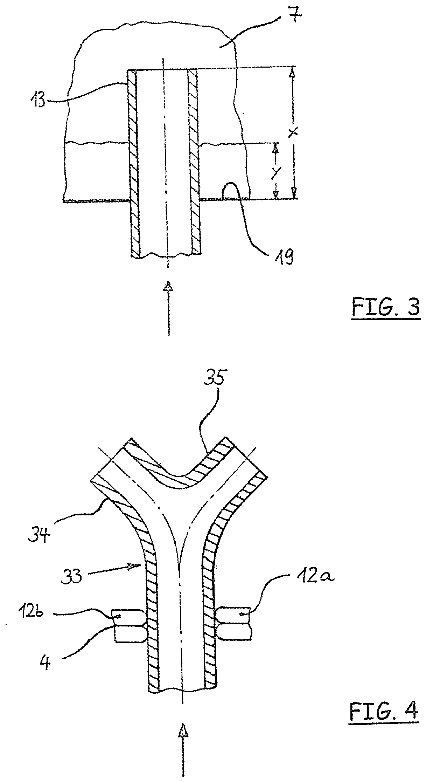

Die Figur 3 zeigt einen in den Kühlkanal 7 ragenden Endbereich des Strömungsrohres 13, das mit einem durch "x" gekennzeichneten Überstand gegenüber einem Kühlkanalboden 19 verlängert ist. Dieser Überstand übertrifft deutlich den mit "y" gekennzeichneten Kühlmittel-Füllstand. Das sich einstellende Differenzmaß verhindert wirksam einen Kühlmittel-Rücklauf bei einem Aufwärtshub des Kolbens 1.

Das Strömungsrohr 33 gemäß Figur 4 schließt an dem zum Kühlkanal 7 gerichteten Ende zwei gekrümmt ausgebildete Austritte 34, 35 ein. Die zueinander entgegengesetzt dem Verlauf des Kühlkanals 7 entsprechend ausgerichteten Austritte 34, 35 verhindern einen durch die Shakerwirkung verursachten Kühlmitteleintritt in das Strömungsrohr 33. Außerdem bilden die Austritte 34, 35 einen den Kühlmittelstrom aufteilenden Strömungsteiler, wodurch der ringförmig ausgebildete Kühlkanal 7 gleichmäßig beaufschlagt wird. In der Einbaulage ist das Strömungsrohr 33 zumindest bereichsweise durch die sich im Bereich der Kontaktgeometrie 4 einstellenden Schweißwülste 12a, 12b fixiert.

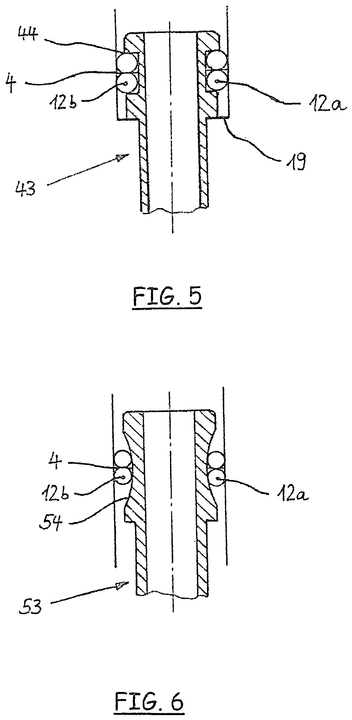

Die Figuren 5 und 6 zeigen die Strömungsrohre 43 und 53, die übereinstimmend zur Aufnahme zumindest einer Schweißwulst 12a, 12b außenseitig Aussparungen einschließen. Die gemäß Figur 5 vorgesehene Ringnut 44 ist so im Bereich der Kontaktgeometrie 4 platziert und dimensioniert, dass diese weitestgehend von den Schweißwülsten 12a, 12b ausgefüllt werden, zur Schaffung einer formschlüssigen Befestigung des Strömungsrohres 43. Alternativ zu der Ringnut 44 ist das in Figur 6 abgebildete Strömungsrohr 53 außenseitig mit einer konkav verlaufenden Ausnehmung 54 versehen, die im eingebauten Zustand des Strömungsrohres 53 zur Aufnahme der Schweißwülste 12a, 12b vorgesehen sind.

### Bezugszeichenliste

- 1: Kolben
- 2: Unterteil
- 3: Oberteil
- 4: Kontaktgeometrie
- 5: Kolbenboden
- 6: Brennraummulde
- 7: Kühlkanal
- 8: Ringfeld
- 9: Außenprofil
- 10a: Fügesteg
- 10b: Fügesteg
- 11a: Fügesteg
- 11b: Fügesteg
- 12a: Schweißwulst
- 12b: Schweißwulst
- 12c: Schweißwulst
- 13: Strömungsrohr
- 14: Eintrittsöffnung
- 15: Austrittsöffnung
- 16: Aufnahmebohrung
- 17: Öffnung
- 18: Bolzenbohrung
- 19: Kühlkanalboden

- 23: Strömungsrohr
- 24: Aussparung
- 25: Abdeckung

- 33: Strömungsrohr
- 34: Austritt
- 35: Austritt

- 43: Strömungsrohr
- 44: Ringnut

- 53: Strömungsrohr
- 54: Ausnehmung

## Patentansprüche

1. Kolben (1) einer Brennkraftmaschine, der ein aus Stahl hergestelltes Oberteil (3) und ein Unterteil (2) umfasst, deren zumindest einer Fügesteg, insbesondere Fügestege (10a, 10b; 11 a, 11b), im Bereich einer Kontaktgeometrie (4) über eine Reibschweißung stoffschlüssig zu einer Baueinheit verbunden sind, wobei in dem Kolben (1) zumindest ein von einem Kühlmittel beaufschlagter Kühlkanal (7) integriert ist und als Kühlmittel ein Schmieröl der Brennkraftmaschine über einen freien Strahl einer Einspritzdüse in eine Eintrittsöffnung (14) gelangt, den Kühlkanal (7) durchströmt über eine Austrittsöffnung (15) verlässt, wobei zur Einleitung des Kühlmittels in den Kühlkanal (7) die Eintrittsöffnung (14) ein in dem Unterteil (2) eingesetztes Strömungsrohr (13, 23, 33, 43, 53) einschließt, das mit einem Überstand aus einem Kühlkanalboden (19) hervortritt, **dadurch gekennzeichnet, dass** die Öffnung (17) des Strömungsrohres oberhalb zumindest einer Schweißwulst (12a, 12b) der Reibschweißung angeordnet ist.

2. Kolben nach Anspruch 1, **dadurch gekennzeichnet, dass** ein Abstandsmaß "x" zwischen der Öffnung (17) des Strömungsrohrs (13) und dem Kühlkanalboden (19) ein Maß "y" übertrifft, das einen Füllstand des Kühlmittels in einer Aufwärtsbewegung des Kolbens (1) in dem Kühlkanal (7) definiert.

3. Kolben nach Anspruch 1 oder 2, **dadurch gekennzeichnet, dass** eine Fixierung des Strömungsrohres (13, 23, 33, 43, 53) zumindest einseitig über die Schweißwulst (12a, 12b) erfolgt.

4. Kolben nach Anspruch 1, 2 oder 3, **dadurch gekennzeichnet, dass** in einer Einbaulage das Strömungsrohr (43, 53) formschlüssig von der zumindest einen Schweißwulst (12a, 12b) fixiert ist.

5. Kolben nach Anspruch 4, **dadurch gekennzeichnet, dass** eine Außenkontur des Strömungsrohres (43) eine Ringnut (44) aufweist, die zur Aufnahme der zumindest einen Schweißwulst (12a, 12b) bestimmt ist.

6. Kolben nach Anspruch 4 oder 5, **dadurch gekennzeichnet, dass** die Außenkontur des Strömungsrohres (53) zur Aufnahme der zumindest einen Schweißwulst (12a, 12b) eine partiell konkav gestaltete Ausnehmung (54) einschließt.

7. Kolben nach einem der vorhergehenden Ansprüche, **dadurch gekennzeichnet, dass** ein aus Stahl hergestelltes Strömungsrohr (13, 23, 33, 43, 53) eingesetzt ist.

8. Kolben nach einem der vorhergehenden Ansprüche, **dadurch gekennzeichnet, dass** das Strömungsrohr (13, 23) von der Aufnahmebohrung (16) in dem Unterteil (2) ausgehend, in Richtung einer Bolzenbohrung (18) des Kolben (1) verlängert ist.

9. Kolben nach einem der vorhergehenden Ansprüche, **dadurch gekennzeichnet, dass** das Strömungsrohr (33) kühlkanalseitig zwei gekrümmt ausgebildete, insbesondere y-förmig verlaufende Austritte (34, 35) aufweist.

10. Kolben nach einem der vorhergehenden Ansprüche, **dadurch gekennzeichnet, dass** der Kühlkanal (7) in zwei voneinander getrennte Hälften oder Kühlkanalsegmente aufgeteilt ist, denen jeweils eine Eintrittsöffnung (14) mit integriertem Strömungsrohr (13, 23, 33, 43, 53) und eine Austrittsöffnung (15) zugeordnet ist.

11. Verfahren zur Herstellung des Kolbens nach einem der Ansprüche 1 bis 10, **gekennzeichnet durch** folgende Schritte:
- Einsetzen eines Strömungsrohrs (13, 23, 33, 43, 53) in eine Aufnahmebohrung (16) des Unterteils (2) des Kolbens (1),
- Festlegen einer Einbaulage des Strömungsrohres (13, 23, 33, 43, 53) so dass dessen Öffnung (17) oder Austritte (34, 35) in einer Einbaulage oberhalb einer Kontaktgeometrie (4) angeordnet ist,
- Zusammensetzen von dem Oberteil (3) und dem Unterteil (2),
- Stoffschlüssiges Zusammenfügen von Oberteil (3) und Unterteil (2) mittels einer Reibschweißung, wobei sich zumindest ein bildender Schweißwulst, insbesondere mehrere Schweißwülste (12a, 12b), das Strömungsrohr (13, 23, 33, 43, 53) zumindest lokal kraft- und oder formschlüssig fixiert.

## Claims

1. Piston (1) of an internal combustion engine comprising a top part (3) produced from steel and a bottom part (2), the at least one joining web, in particular joining webs (10a, 10b; 11a, 11b), of which are integrally bonded in the region of a contact geometry (4) via a friction weld to form a structural unit, wherein at least one cooling duct (7) permeated by a coolant is integrated in the piston (1) and a lubricating oil of the internal combustion engine passes as the coolant into an inlet opening (14) via a free jet of an injection nozzle, flows through the cooling duct (7) and leaves the latter via an outlet opening (15), wherein, for the introduction of the coolant into the cooling duct (7), the inlet opening (14) includes a flow pipe (13, 23, 33, 43, 53) which is inserted in the bottom part (2) and protrudes from a cooling duct base (19) with an excess length, **characterized in that** the opening (17) of the flow pipe is arranged above at least one weld bead (12a, 12b) of the friction weld.

2. Piston according to Claim 1, **characterized in that** a clearance "x" between the opening (17) of the flow pipe (13) and the cooling duct base (19) exceeds a dimension "y", which defines a fill level of the coolant in an upward movement of the piston (1) in the cooling duct (7).

3. Piston according to Claim 1 or 2, **characterized in that** the flow pipe (13, 23, 33, 43, 53) is fixed at least on one side via the weld bead (12a, 12b).

4. Piston according to Claim 1, 2 or 3, **characterized in that** the flow pipe (43, 53) is fixed in a positively locking manner by the at least one weld bead (12a, 12b) in an installed position.

5. Piston according to Claim 4, **characterized in that** an outer contour of the flow pipe (43) has an annular groove (44) intended for receiving the at least one weld bead (12a, 12b).

6. Piston according to Claim 4 or 5, **characterized in that** the outer contour of the flow pipe (53) includes a partially concave recess (54) for receiving the at least one weld bead (12a, 12b).

7. Piston according to one of the preceding claims, **characterized in that** use is made of a flow pipe (13, 23, 33, 43, 53) produced from steel.

8. Piston according to one of the preceding claims, **characterized in that** the flow pipe (13, 23) is extended in the direction of a pin hole (18) of the piston (1), proceeding from the receiving bore (16) in the bottom part (2).

9. Piston according to one of the preceding claims, **characterized in that** the flow pipe (33) has two curved outlets (34, 35) extending, in particular, in a y-shaped manner on the cooling duct side.

10. Piston according to one of the preceding claims, **characterized in that** the cooling duct (7) is split into two halves or cooling duct segments which are separated from one another and are each assigned an inlet opening (14) with an integrated flow pipe (13, 23, 33, 43, 53) and an outlet opening (15).

11. Process for producing the piston according to one of Claims 1 to 10, **characterized by** the following steps:
- a flow pipe (13, 23, 33, 43, 53) is inserted into a receiving bore (16) of the bottom part (2) of the piston (1),
- an installed position of the flow pipe (13, 23, 33, 43, 53) is fixed such that the opening (17) or outlets (34, 35) thereof is or are arranged in an installed position above a contact geometry (4),
- the top part (3) and the bottom part (2) are assembled,
- the top part (3) and the bottom part (2) are joined together integrally by means of a friction weld, wherein at least one weld bead that forms, in particular a plurality of weld beads (12a, 12b) that form, fixes the flow pipe (13, 23, 33, 43, 53) at least locally in a nonpositively and/or positively locking manner.

## Revendications

1. Piston (1) pour moteur à combustion interne, comprenant une partie supérieure (3) réalisée en acier et une partie inférieure (2) dont au moins une nervure de jonction et en particulier plusieurs nervures de jonction (10a, 10b; 11a, 11b) sont reliées par soudage par frottement en correspondance de matière au niveau d'une géométrie de contact (4) pour former une unité structurelle,
au moins un canal de refroidissement (7) alimenté en fluide de refroidissement étant intégré dans le piston (1) et de l'huile de lubrification du moteur à combustion interne, servant de fluide de refroidissement, aboutissant dans une ouverture d'entrée (4) par l'intermédiaire du jet libre d'une tuyère d'injection, traversant le canal de refroidissement (7) et le quittant par une ouverture de sortie (15),
l'ouverture d'entrée (14) incorporant pour introduire le fluide de refroidissement dans le canal de refroidissement (7) un tube d'écoulement (13, 23, 33, 43, 53) inséré dans la partie inférieure (2) et sortant du fond (19) du canal de refroidissement avec un débord,
**caractérisé en ce que**
l'ouverture (17) du tube d'écoulement est disposée au-dessus d'au moins un cordon de soudure (12a, 12b) du soudage par frottement.

2. Piston selon la revendication 1, **caractérisé en ce que** la distance "x" entre l'ouverture (17) du tube d'écoulement (13) et le fond (19) du canal de refroidissement dépasse une dimension "y" qui définit l'étape de remplissage du fluide de refroidissement dans le canal de refroidissement (7) au cours d'un déplacement du piston (1) vers le haut.

3. Piston selon les revendications 1 ou 2, **caractérisé en ce qu'**une fixation du tube d'écoulement (13, 23, 33, 43, 53) au moins d'un côté s'effectue par l'intermédiaire du cordon de soudure (12a, 12b).

4. Piston selon les revendications 1, 2 ou 3, **caractérisé en ce que** lorsque le tube d'écoulement (43, 53) est en position montée, il est fixé en correspondance géométrique par le ou les cordons de soudure (12a, 12b).

5. Piston selon la revendication 4, **caractérisé en ce que** le contour extérieur du tube d'écoulement (43) présente une rainure annulaire (44) définie pour reprendre le ou les cordons de soudure (12a, 12b).

6. Piston selon les revendications 4 ou 5, **caractérisé en ce que** le contour extérieur du tube d'écoulement (53) englobe une découpe (54) au moins partiellement de forme concave en vue de reprendre le ou les cordons de soudure (12a, 12b).

7. Piston selon l'une des revendications précédentes, **caractérisé en ce qu'**un tube d'écoulement (13, 23, 33, 43, 53) réalisé en acier est utilisé.

8. Piston selon l'une des revendications précédentes, **caractérisé en ce que** le tube d'écoulement (13, 23) est prolongé en direction d'un alésage (18) de goujon du piston (1) partant de l'alésage de réception (19) ménagé dans la partie inférieure (2).

9. Piston selon l'une des revendications précédentes, **caractérisé en ce que** le tube d'écoulement (33) présente du côté du canal de refroidissement deux sorties (34, 35) de forme incurvée et en particulier s'étendant en y.

10. Piston selon l'une des revendications précédentes, **caractérisé en ce que** le canal de refroidissement (7) est divisé en deux moitiés séparées l'une de l'autre ou en deux segments de canal de refroidissement à chacun desquels une ouverture d'entrée (14) à laquelle est intégré un tube d'écoulement (13, 23, 33, 43, 53) et une ouverture de sortie (15) sont associées.

11. Procédé de fabrication du piston selon l'une des revendications 1 à 10, **caractérisé par** les étapes suivantes :
insertion d'un tube d'écoulement (13, 23, 33, 43, 53) dans un alésage de réception (16) ménagé dans la partie inférieure (2) du piston (1),
définition d'une position d'incorporation du tube d'écoulement (13, 23, 33, 43, 53) de telle sorte que son ouverture (17) ou ses sorties (34, 35) soient disposées au-dessus d'une géométrie de contact (4) en position de montage,
assemblage de la partie supérieure (3) et de la partie inférieure (2),
jonction en correspondance de matière de la partie supérieure (3) et de la partie inférieure (2) au moyen d'un soudage par frottement, au moins un cordon de soudure ainsi formé et en particulier plusieurs cordons de soudure (12a, 12b) fixant le tube d'écoulement (13, 23, 33, 43, 53) au moins localement en correspondance mécanique et/ou en correspondance géométrique.
